# FASCICULE DE BREVET EUROPEEN

(11) **EP 3 648 443 B1**
(45) Date de publication et mention de la délivrance du brevet: **17.08.2022**
(21) Numéro de dépôt: 19205275.1
(22) Date de dépôt: 25.10.2019
(51) Int. Cl.: H04M 3/436, H04M 3/42

(54) **GESTION D'UNE COMMUNICATION ENTRE UN TERMINAL DE COMMUNICATION APPELANT, DISPOSANT D'UN IDENTIFIANT D'APPEL PRINCIPAL ET D'UN IDENTIFIANT D'APPEL SECONDAIRE, ET UN TERMINAL DE COMMUNICATION APPELÉ**
VERWALTUNG EINER KOMMUNIKATION ZWISCHEN EINEM ANRUFENDEN KOMMUNIKATIONS-ENDGERÄT MIT EINER HAUPT-ANRUFSKENNUNG UND EINER NEBEN-ANRUFSKENNUNG, UND EINEM ANGERUFENEN KOMMUNIKATIONS-ENDGERÄT.
MANAGEMENT OF A COMMUNICATION BETWEEN A CALLER DEVICE HAVING A PRIMARY CALL IDENTIFIER AND A SECONDARY CALL IDENTIFIER AND A CALLEE DEVICE.

(30) Priorité: 05.11.2018 FR 1860159
(43) Date de publication de la demande: 06.05.2020
(73) Titulaire: Orange, 92130 Issy-les-Moulineaux (FR)
(72) Inventeur: AUFFRET, Jean-Marc, 92326 CHATILLON (FR); GUILLOU, Aurélien, 92326 CHATILLON (FR)
(74) Mandataire: Vidon Brevets & Stratégie

(56) Documents cités:
- EP-A2- 1 396 989
- WO-A1-2017/060643
- US-A1- 2007 105 531
- US-A1- 2011 034 156
- US-A1- 2013 282 789
- US-A1- 2016 100 050
- JOHNSTON MCI S DONOVAN R SPARKS C CUNNINGHAM DYNAMICSOFT K SUMMERS SONUS A: "Session Initiation Protocol (SIP) Basic Call Flow Examples; rfc3665.txt", SESSION INITIATION PROTOCOL (SIP) BASIC CALL FLOW EXAMPLES; RFC3665.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 décembre 2003 (2003-12-01), XP015009446,

## Description

### 1. Domaine de l'invention

Le domaine de l'invention est celui de la gestion d'une communication entre deux terminaux de communication. Plus précisément, l'invention concerne les services de communication permettant à un utilisateur de disposer de plusieurs identifiants d'appel associés à un même terminal de communication.

### 2. Art antérieur et ses inconvénients

Certains services de communication proposent actuellement d'allouer un ou plusieurs identifiant(s) d'appel secondaire(s) au terminal de communication d'un utilisateur appelant, disposant déjà d'un identifiant d'appel principal. Par exemple, dans le cas où l'utilisateur appelant dispose d'un terminal de communication mobile, l'identifiant d'appel principal est un identifiant MSISDN (en anglais « Mobile Station International Subscriber Directory Number ») correspondant de manière unique à la carte SIM (en anglais « Subscriber Identity Module ») qui est fournie par l'opérateur du réseau mobile auprès duquel s'est inscrit l'utilisateur. En règle générale, cet identifiant est le numéro de téléphone du terminal mobile dans ce réseau mobile, connu du public. De tels services permettent par exemple de garantir l'anonymat de l'utilisateur, et lui sont notamment proposés lorsque l'abonné appelant souhaite passer une annonce sur un site Internet dédié à cet effet, tel que par exemple un site de petites annonces, un site de rencontres, un réseau social de type personnel ou professionnel, etc... Il est alors proposé à l'utilisateur de bénéficier d'un identifiant d'appel secondaire qu'il peut utiliser pour contacter par téléphone toute personne ayant laissé ses coordonnées sur le site Internet dédié, sans avoir à dévoiler à cette personne son identifiant d'appel principal. L'utilisateur appelant est également joignable sur cet identifiant d'appel secondaire.

Plus généralement, cette possibilité de disposer de plusieurs identifiants d'appel pour un même terminal présente d'autres intérêts que la simple garantie d'anonymat du terminal appelant. En effet, l'utilisateur peut disposer de plusieurs identifiants d'appel qu'il peut alors utiliser dans différents contextes. Par exemple, il peut réserver l'usage de son identifiant d'appel principal aux communications établies dans un contexte professionnel, et utiliser un ou plusieurs identifiants d'appel secondaires pour les communications de sa sphère privée, par exemple un premier identifiant d'appel secondaire pour communiquer avec sa famille et ses amis, et un second identifiant d'appel secondaire réservé à ses échanges via les réseaux sociaux.

Un tel service de communication fonctionne de la façon suivante. L'utilisateur qui souhaite en bénéficier s'inscrit préalablement à une plateforme gérant ce service en fournissant ses coordonnées personnelles, et en particulier son identifiant d'appel principal. Un identifiant d'appel secondaire lui est alors alloué puis est enregistré dans la plateforme en correspondance avec son identifiant principal. L'utilisateur télécharge l'application dédiée à ce service sur son téléphone. Lorsque l'utilisateur souhaite établir une communication avec un terminal de communication appelé, il envoie à la plateforme de gestion de communication, via l'application, un message contenant son identifiant d'appel principal et un identifiant d'appel de l'usager qu'il souhaite appeler. Un appel, par exemple vocal, est déclenché à destination de l'identifiant d'appel du terminal de communication appelé.

Cet appel est intercepté par un routeur du réseau de communication qui récupère auprès de la plateforme de gestion de communication l'identifiant secondaire du terminal appelant, puis émet un appel depuis cet identifiant secondaire vers l'identifiant d'appel principal du terminal de l'usager appelé. Enfin, le routeur établit la communication entre le terminal appelant et le terminal appelé.

Bien que ce service soit bien adapté pour garantir efficacement l'anonymat de l'utilisateur qui γ a souscrit et assurer la continuité de l'appel, il présente un certain nombre d'inconvénients, tant pour le terminal appelé que pour le terminal appelant.

Pour l'utilisateur du terminal appelé tout d'abord, il peut s'avérer difficile d'identifier l'émetteur d'un appel entrant si ce dernier est établi à partir d'un identifiant d'appel secondaire, qui est par nature volatile. Même si l'utilisateur du terminal appelant est un contact connu et enregistré dans le carnet d'adresses du terminal appelé, il peut ne pas être identifié par l'utilisateur appelé si la communication est établie à partir d'un identifiant d'appel secondaire inconnu de celui-ci.

Ceci peut notamment s'avérer problématique dans le cas où l'appel reçu correspond à un démarchage commercial, que l'utilisateur du terminal appelé juge nuisible et inopportun. Dans le cas extrême où l'utilisateur du terminal appelé considère que cet appel s'apparente à un spam (en français, courrier indésirable, ou pourriel), et a fait la démarche de bloquer l'identifiant d'appel principal du terminal appelant, l'usage d'un identifiant d'appel secondaire par le terminal appelant lui permet de contourner ce blocage, ce qui constitue une nuisance pour l'utilisateur du terminal appelé.

De même, quand l'utilisateur du terminal appelant ne recherche pas spécifiquement l'anonymat, cette situation peut également s'avérer problématique. Par exemple, quand l'utilisateur du terminal appelant fait de la prospection commerciale, il a peu de chance de voir l'utilisateur du terminal appelé accepter un appel entrant émis depuis un identifiant d'appel secondaire qu'il n'aurait pas préalablement enregistré dans son carnet d'adresses, si le terminal appelé n'a pas souscrit à un service d'annuaire inversé lui permettant par exemple d'identifier l'entreprise ou la société émettrice de l'appel. L'activité professionnelle de l'utilisateur appelant peut donc être entravée par l'utilisation d'un identifiant d'appel secondaire.

De même, dans la sphère privée, l'utilisateur peut avoir des difficultés à joindre ses amis, lorsqu'il utilise un identifiant d'appel secondaire que ces derniers ne reconnaissent pas comme appartenant à l'un de leurs contacts connus.

Le document D1 (JOHNSTON et al : « Session Initiation Protocol (SIP) Basic Call Flow Examples») donne des exemples de scénarios de flux d'appels SIP (« *Session Initiation Protocol* »). Ces scénarios comprennent notamment l'enregistrement SIP (« *SIPRegistration* ») et l'établissement de sessions SIP (« *SIP session establishment* »).

Le document D3 (US 2007/105531 A1 - Schroeder B S JR) concerne l'optimisation de l'utilisation d'identités virtuelles multiples associées à une identité principale d'un terminal de communication mobile. Plus particulièrement, D3 cherche à faciliter l'utilisation d'identités virtuelles multiples depuis un terminal de communication mobile.

Il existe donc un besoin d'une technique de gestion de communication ne présentant pas ces différents inconvénients de l'art antérieur. Notamment, il existe un besoin d'une telle technique qui permette à un utilisateur de bénéficier de la souplesse de l'utilisation de plusieurs identifiants d'appel pour établir des communications, tout en améliorant ses chances de voir ses appels effectivement aboutir. Il existe également un besoin d'une telle technique qui réduise les nuisances générées pour l'utilisateur du terminal appelé par l'utilisation d'identifiants d'appel secondaires par un terminal de communication appelant.

### 1. Exposé de l'invention

L'invention répond à ce besoin en proposant un procédé de gestion d'une communication entre un terminal de communication appelant et un terminal de communication appelé, le terminal de communication appelant disposant d'un identifiant d'appel principal permanent et d'au moins un identifiant d'appel secondaire temporaire enregistré, en associant avec ledit identifiant d'appel principal, dans au moins un dispositif de gestion de communication.

L'invention est spécifiée par les revendications indépendantes 1, 3, 4, 5, 6, 10, 11 et 12. D'autres concrétisations de l'invention sont spécifiées par les revendications dépendantes.

Ainsi, l'invention repose sur une approche tout à fait nouvelle et inventive de la gestion des communications entre terminaux appelant et appelé lorsque le terminal appelant dispose d'un identifiant d'appel principal permanent (classiquement, son numéro de téléphone principal connu du public) et d'un ou plusieurs identifiants d'appel secondaires temporaires (i.e. un ou plusieurs autres numéros de téléphone dont il a fait l'acquisition auprès de l'opérateur de son réseau de communication mobile). En effet, ces différents procédés de gestion de communication selon un mode de réalisation de l'invention, mis en œuvre respectivement dans une plateforme de gestion de communication pour le premier, et dans le terminal de communication appelé pour le second, reposent sur l'envoi, par la plateforme de gestion de communication, d'une notification destinée au terminal de communication appelé, qui contient l'identifiant d'appel principal du terminal appelant, mais également l'identifiant d'appel secondaire qu'il utilise pour établir la communication avec le terminal appelé, et une information d'identification de l'utilisateur du terminal appelant.

Cette information d'identification de l'utilisateur du terminal appelant peut prendre diverses formes : il peut s'agir d'une information textuelle du type nom/prénom, ou nom de la société pour le compte de laquelle l'utilisateur travaille, ou plus précisément le nom d'un service au sein de cette société ; il peut également s'agir d'une image, comme la photo de l'utilisateur ou le logo de son entreprise ; il peut encore s'agir d'une vidéo ou d'une image animée, par exemple une publicité pour l'entreprise dans laquelle l'utilisateur travaille ou pour l'un de ses produits; cette information d'identification peut encore prendre la forme d'un hyperlien qui pointe vers un site internet, par exemple un hyperlien qui pointe sur le nom de l'entreprise de l'utilisateur appelant ou son logo.

Ainsi, l'envoi d'une telle notification par la plateforme de gestion de communication vers le terminal appelé enrichit les connaissances de l'utilisateur appelé sur le contexte de la communication entrante, afin de lui permettre de décider s'il doit accepter ou refuser la communication entrante.

En effet, sur la base de l'identifiant d'appel principal permanent (e.g. le MSISDN) du terminal appelant, le terminal appelé peut vérifier si l'utilisateur appelant correspond à un contact qu'il aurait déjà enregistré dans son carnet d'adresses. Dans l'affirmative, cela lui permet d'afficher directement, pour l'utilisateur appelé, les informations de contact enregistrées dans le carnet d'adresses en association avec ce numéro de téléphone principal, et ce, bien que la communication entrante soit établie sur la base d'un identifiant d'appel secondaire temporaire non connu de l'utilisateur appelé.

Dans la négative, le terminal appelé peut cependant afficher les informations d'identification de l'utilisateur appelant contenues dans la notification reçue de la plateforme de gestion de communication (logo, nom de société, ...). L'utilisateur appelé a ainsi davantage d'informations sur la personne qui cherche à le joindre, et donc le contexte de cet appel. Il peut alors prendre une décision éclairée quant à l'acceptation ou au rejet de cette communication entrante.

On notera que, dans l'ensemble de ce document, on désigne par identifiant d'appel principal un identifiant d'appel associé de façon permanente à un terminal de communication identifié dans le réseau de communication d'un opérateur. Ainsi, en général, un tel identifiant d'appel principal ne peut être modifié sans résiliation du contrat avec l'opérateur du réseau. Dans le cas d'un réseau de communication mobile, un tel identifiant d'appel principal est le numéro d'appel MSISDN correspondant de manière unique à la carte SIM.

De même, on désigne par identifiant d'appel secondaire, un identifiant d'appel associé de façon temporaire à un terminal de communication : un tel identifiant d'appel temporaire est généré dans le réseau de communication de l'opérateur à la demande de l'utilisateur du terminal de communication, pour une durée limitée (mais éventuellement longue). Un tel identifiant d'appel secondaire est, par essence, volatile.

Ainsi, l'ensemble des identifiants d'appel d'un terminal de communication dans le réseau de l'opérateur présentent une structure arborescente, dont la racine est l'identifiant d'appel principal permanent du terminal, et dont les identifiants d'appel secondaires forment autant de feuilles caduques de la structure. Une session de communication entre un terminal appelant et un terminal appelé peut alors être établie à partir soit d'un identifiant d'appel principal, soit d'un identifiant d'appel secondaire.

Selon un aspect d'un tel procédé de gestion de communication, mis en œuvre par un dispositif de gestion de communication, une telle notification comprend également une instruction de gestion d'un contact associé à l'utilisateur du terminal appelant, l'instruction de gestion appartenant au groupe comprenant :
- une instruction de création ;
- une instruction de lecture ;
- une instruction de mise à jour ;
- une instruction de suppression.

Ces instructions sont connues sous le terme anglais d'opérations CRUD (pour « Create, Read, Update, Delete »). Elles permettent au terminal de communication appelé de gérer la base de données associée au carnet d'adresses des contacts de l'utilisateur, par exemple en y enregistrant l'identifiant d'appel secondaire d'un contact déjà connu en association avec son identifiant d'appel principal, ou en y enregistrant les informations d'identification de l'utilisateur appelant contenues dans la notification (par exemple le logo de son entreprise).

En effet, en corollaire, selon un aspect d'un tel procédé de gestion de communication, en cas de présence de l'identifiant d'appel principal dans le carnet d'adresses, le terminal de communication appelé met à jour, dans le carnet d'adresses, un contact associé à un utilisateur du terminal appelant, par ajout de l'identifiant d'appel secondaire et/ou de l'information d'identification compris dans la notification reçue.

Ainsi, le terminal appelé enrichit les informations contenues dans le carnet d'adresse pour ce contact particulier, en enregistrant son nouveau numéro de téléphone, et les informations de profil qu'il a voulu renseigner auprès de la plateforme de gestion de communication.

Selon un autre aspect, en cas d'absence de l'identifiant d'appel principal et de l'identifiant d'appel secondaire dans le carnet d'adresses, il comprend également, à l'issue de la communication entrante, un affichage, par le terminal appelé, d'un message proposant d'enregistrer l'information d'identification, en association avec l'identifiant d'appel secondaire et/ou l'identifiant d'appel principal, dans le carnet d'adresses.

Ainsi, l'utilisateur appelé peut aisément créer un nouveau contact dans son carnet d'adresses, dans lequel il mémorise les différentes informations contenues dans la notification reçue de la plateforme de gestion de communication (numéro de téléphone principal, numéro de téléphone secondaire, informations de profil de l'utilisateur...).

Selon encore un autre aspect, un tel procédé de gestion d'une communication entrante par un terminal appelé comprend également une vérification que l'identifiant d'appel principal et/ou l'identifiant d'appel secondaire est un identifiant d'appel bloqué, et, dans l'affirmative, un rejet de la communication entrante initiée à partir de l'identifiant d'appel secondaire.

Ainsi, on améliore la performance des mécanismes anti-spams : si l'utilisateur appelé a déjà bloqué le numéro de téléphone principal d'un utilisateur appelant importun, il peut, grâce aux informations contenues dans la notification qu'il reçoit, identifier directement que le numéro de téléphone secondaire utilisé pour la communication entrante est associé au même terminal appelant, et donc rejeter directement l'appel. Il peut également enrichir la base de données des numéros de téléphone associés à des spams, en y enregistrant cet identifiant d'appel secondaire.

L'invention concerne également un produit programme d'ordinateur comprenant des instructions de code de programme pour la mise en œuvre d'un procédé de gestion de communication par un dispositif de gestion de communication tel que décrit précédemment, lorsqu'il est exécuté par un processeur. Elle concerne encore un produit programme d'ordinateur comprenant des instructions de code de programme pour la mise en œuvre d'un procédé de gestion de communication entrante par un terminal de communication appelé tel que décrit précédemment, lorsqu'il est exécuté par un processeur.

L'invention vise également un support d'enregistrement lisible par un ordinateur sur lequel est enregistré un programme d'ordinateur comprenant des instructions de code de programme pour l'exécution des étapes de l'un des deux procédés de gestion de communication selon l'invention tels que décrits ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de contrôle d'affichage précité.

L'invention concerne encore un dispositif de gestion de communication pour l'établissement d'une communication entre un terminal de communication appelant et un terminal de communication appelé. Un tel dispositif de gestion de communication comprend un circuit de traitement qui est configuré pour enregistrer, en association, un identifiant d'appel principal permanent et au moins un identifiant d'appel secondaire temporaire dudit terminal de communication appelant, et qui est également configuré pour :
- recevoir une communication initiée par le terminal de communication appelant, à partir de l'identifiant d'appel secondaire, à destination du terminal de communication appelé ;
- émettre, vers le terminal appelé, une notification comprenant au moins l'identifiant d'appel principal, l'identifiant d'appel secondaire, et au moins une information d'identification d'un utilisateur du terminal appelant associée à l'identifiant d'appel secondaire ;
- router la communication vers le terminal appelé en utilisant l'identifiant d'appel secondaire.

Un tel dispositif est par exemple une plateforme de service gérant l'allocation des identifiants d'appel secondaires aux abonnés d'un réseau de communication mobile, telle que la plateforme O-IONA^{®} développée par Orange^{®}.

L'invention concerne également un terminal de communication, comprenant un circuit de traitement configuré pour traiter une communication entrante initiée par un terminal de communication appelant, disposant d'un identifiant d'appel principal permanent et d'au moins un identifiant d'appel secondaire temporaire enregistré, en associant avec l'identifiant d'appel principal, dans au moins un dispositif de gestion de communication. Un tel circuit de traitement est également configuré, lorsque la communication entrante est initiée à partir de l'identifiant d'appel secondaire, pour :
- recevoir une notification comprenant au moins l'identifiant d'appel principal, l'identifiant d'appel secondaire, et au moins une information d'identification d'un utilisateur du terminal appelant associée à l'identifiant d'appel secondaire ;
- effectuer une vérification de présence de l'identifiant d'appel principal et/ou de l'identifiant d'appel secondaire dans un carnet d'adresses du terminal de communication appelé ;
- sur réception de la communication entrante :
   o en cas de présence de l'identifiant d'appel principal et/ou de l'identifiant d'appel secondaire dans le carnet d'adresses, afficher un identifiant d'utilisateur mémorisé dans le carnet d'adresses en association avec l'identifiant d'appel présent ;
   o en cas d'absence de l'identifiant d'appel principal et de l'identifiant d'appel secondaire dans le carnet d'adresses, afficher l'information d'identification comprise dans la notification reçue.

Le dispositif de gestion de communication, le terminal de communication et les programmes d'ordinateur correspondants précités présentent au moins les mêmes avantages que ceux conférés par les procédés de gestion de communication selon la présente invention.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- La **figure 1** présente une vue schématique et générale d'un système d'établissement d'une communication entre un terminal de communication appelant et un terminal de communication appelé selon un mode de réalisation de l'invention ;
- La **figure 2** présente la structure simplifiée d'un dispositif de gestion de communication appartenant au système de la **figure 1****,** selon un mode de réalisation ;
- la **figure 3** illustre la structure simplifiée d'un terminal de communication appelé appartenant au système de la **figure 1****,** selon un mode de réalisation ;
- la **figure 4** présente les principales étapes d'un procédé de gestion de communication entre un terminal de communication appelant et un terminal de communication appelé selon un mode de réalisation de l'invention ;
- la **figure 5** présente une variante de la **figure 4****,** dans le cas particulier de la gestion des identifiants d'appel indésirables.

### 5. Description détaillée de modes de réalisation de l'invention

Le principe général de l'invention repose sur l'envoi, par une plateforme de gestion de communication, d'une notification, préalablement à l'établissement d'une communication entre un terminal de communication appelant et un terminal de communication appelé, comprenant l'identifiant d'appel principal permanent du terminal appelant, son identifiant d'appel secondaire temporaire utilisé pour initier la communication, et des informations d'identification complémentaires de l'utilisateur appelant. Cette notification est envoyée au terminal appelé, qui peut utiliser son contenu pour faciliter l'identification, par l'utilisateur appelé, de l'utilisateur appelant.

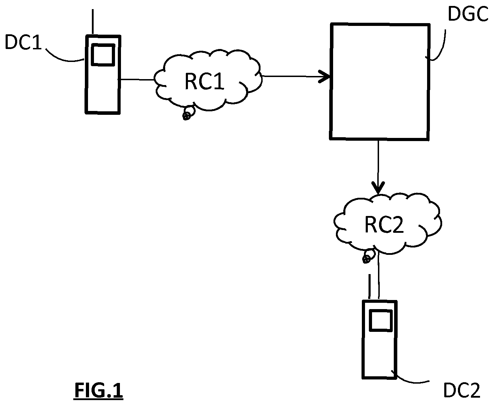

La **figure 1** illustre schématiquement un système dans lequel sont mis en œuvre les procédés de gestion d'une communication selon un mode de réalisation de l'invention. Dans un souci de clarté de la **figure 1****,** certains éléments bien connus de ce système ne sont pas représentés. De tels éléments sont par exemple des serveurs, des nœuds, des stations de base, des passerelles ou encore d'autres entités du réseau de télécommunications utilisé dans ce système.

Le système comprend un premier dispositif de communication DC1 apte à établir une communication à destination d'un deuxième dispositif de communication DC2.

Dans l'exemple représenté, le dispositif de communication DC1 est un téléphone mobile comprenant une carte SIM dotée d'un identifiant d'abonné unique appelé IMSI (abréviation anglaise de « International Mobile Subscriber Identity »). De façon connue en soi, cet identifiant est utilisé pour identifier le dispositif de communication DC1 dans son réseau de communication de rattachement RC1, c'est-à-dire le réseau auprès duquel l'utilisateur UT1 du dispositif de communication DC1 s'est abonné. Dans l'exemple représenté, le réseau RC1 est de type mobile tel qu'un réseau GSM (abréviation anglaise de « Global System for Mobile communications ») ou UMTS (abréviation anglaise de « Universal Mobile Telecommunications System ») ou LTE (abréviation anglaise de « Long Term Evolution »). L'identifiant IMSI est associé à un identifiant d'appel principal MSISDN, noté IAP1, qui est un numéro de téléphone « physique », en ce sens où il s'agit du numéro de téléphone associé à la carte SIM permettant de joindre le dispositif de communication DC1. Ainsi, l'identifiant d'appel principal IAP1 ne peut pas être modifié à moins d'annuler le contrat avec l'opérateur téléphonique et obtenir une autre carte SIM. En d'autres termes, l'identifiant d'appel principal est un identifiant permanent adjoint au dispositif de communication DC1 dans le réseau RC1.

Cet exemple n'est bien sûr pas limitatif. Ainsi, selon un autre exemple, le dispositif de communication DC1 est par exemple un téléphone fixe rattaché à un autocommutateur téléphonique privé PABX (de l'anglais « Private Automatic Branch eXchange »).

En fonction du type du réseau de communication RC1, l'identifiant d'appel principal IAP1 du dispositif de communication DC1 pourrait être différent d'un numéro de téléphone. Par exemple, il pourrait consister en des métadonnées associées à l'utilisateur UT1 du dispositif de communication DC1, tel qu'en particulier une image ou des informations sur l'utilisateur, telles que son nom et son adresse.

Dans le mode de réalisation de la **figure 1****,** le premier dispositif de communication DC1 dispose également d'un ou plusieurs identifiant(s) d'appel secondaire(s) IAS1, qui sont des numéros de téléphone supplémentaires permettant de joindre le dispositif de communication et d'initier des communications vers d'autres dispositifs de communication.

L'identifiant d'appel secondaire IAS1 est un numéro d'appel dit "virtuel", c'est-à-dire qui a une durée de vie limitée en fonction des besoins de l'utilisateur UT1, car il est généré dans le réseau d'appel (notamment via des plateformes IMS/SIP) et à la demande de l'utilisateur. Dans un exemple, l'utilisateur UT1 n'a besoin de cet identifiant d'appel secondaire IAS1 que pour une journée, une semaine ou un mois. En d'autres termes, on peut très bien utiliser un tel identifiant d'appel secondaire IAS1, ou « numéro secondaire », pour appeler les membres de sa famille, donc à des fins privées, et un identifiant d'appel secondaire différent pour ses activités professionnelles.

Tous les « numéros secondaires » sont liés au numéro principal, ou identifiant d'appel principal IAP1, notamment grâce à un Système de Gestion de Base de Données (SGBD) dans le réseau IMS/SIP par exemple, pour pouvoir gérer l'identité des appels à travers tous les « numéros secondaires » et ainsi savoir à qui appartient tel ou tel « numéro secondaire ». En d'autres termes, l'identifiant d'appel secondaire IAS1 est un identifiant d'appel supplémentaire associé à l'identifiant d'appel principal IAP1 et dont la nature est volatile.

Le deuxième dispositif de communication DC2 est apte à recevoir la communication initiée par le dispositif de communication DC1. De la même façon que le dispositif de communication DC1, le dispositif de communication DC2 est également doté d'un identifiant d'appel principal IAP2. Dans l'exemple représenté, le dispositif de communication DC2 est un téléphone mobile rattaché à un réseau de communication RC2 de type mobile. Toutefois, le dispositif de communication DC2 peut être également un téléphone fixe rattaché à un réseau de télécommunications commuté ou bien encore un serveur de communication, tel que par exemple un serveur de réception d'appels d'urgence. Le deuxième dispositif de communication DC2 peut, ou non, disposer également d'un ou plusieurs identifiant(s) d'appel secondaire(s) IAS2.

Selon un autre exemple non représenté, les réseaux de communication RC1 et RC2 peuvent former un réseau de communication unique d'un même opérateur de télécommunications.

En outre, dans la présente description, on entend par « communication » un appel vocal classique ou n'importe quelle autre session de communication de type données et/ou audio et/ou vidéo initiée par le dispositif de communication DC1 à destination du dispositif de communication DC2.

Le système représenté sur la **figure 1** comprend en outre un dispositif de gestion de communication DGC. Un tel dispositif est une plateforme installée dans le réseau qui est destinée à :
- gérer l'allocation d'identifiants d'appel secondaires aux dispositifs de communication qui en font la demande. A ce titre, le dispositif DGC maintient notamment une base de données dans laquelle elle enregistre, en association, l'identifiant principal IAP et un ou plusieurs identifiants d'appel secondaires IAS (par exemple, pour le dispositif de communication DC1, un couple (IAP1, IAS1));
- traiter toute communication initiée par le dispositif de communication DC1 à partir d'un de ses identifiants d'appel secondaires, à destination de l'identifiant d'appel principal IAP2 du dispositif de communication DC2.

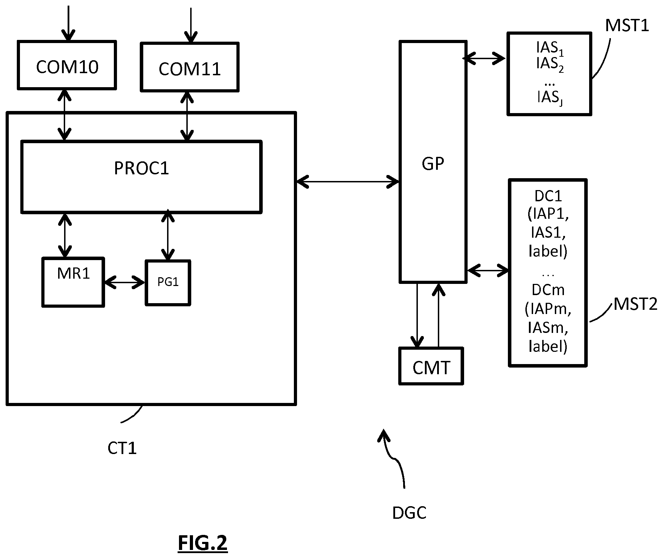

En relation avec la **figure 2****,** on considère maintenant la structure simplifiée de la plateforme de gestion de communication DGC selon un exemple de réalisation de l'invention. Une telle plateforme est adaptée pour mettre en œuvre le procédé de gestion d'une communication entre un terminal appelant et un terminal appelé selon un mode de réalisation de l'invention qui va être décrit ci-dessous.

Par exemple, la plateforme DGC de gestion de communication comprend des ressources physiques et/ou logicielles, en particulier un circuit de traitement CT1 pour mettre en œuvre le procédé de gestion de communication selon un mode de réalisation de l'invention, le circuit de traitement CT1 contenant un processeur PROC1 piloté par un programme d'ordinateur PG1.

A l'initialisation, les instructions de code du programme d'ordinateur PG1 sont par exemple chargées dans une mémoire RAM, notée MR1, avant d'être exécutées par le circuit de traitement CT1.

La plateforme DGC de gestion de communication comprend principalement :
- une interface de communication COM10 qui est adaptée pour échanger des messages avec le dispositif de communication DC1 de la **figure 1****,** via le réseau RC1 ou bien un autre réseau non représenté sur la **figure 1****,** lesdits messages étant conformes par exemple au protocole http (abréviation anglaise de « HyperText Transfer Protocol ») ;
- une interface de communication COM11 apte à communiquer avec les dispositifs de communication DC1 et DC2 et qui, selon le type de communication à établir, peut-être une interface de communication apte à émettre ou recevoir des appels vocaux ou bien une interface de communication apte à émettre ou recevoir des messages textuels de type SMS (de l'anglais « Short Message Service ») ou bien encore une interface de communication apte à émettre ou recevoir des messages multimédia de type MMS (de l'anglais « Multimedia Messaging Service ») ;
- un gestionnaire de profils GP apte à gérer le profil de l'utilisateur UT1 du dispositif de communication DC1 ;
- un premier module de stockage MST1, par exemple une base de données, relié au gestionnaire de profils GP et contenant une pluralité d'identifiants d'appel secondaires IAS₁, IAS₂,...,IASₘ,..., IAS_{J} où J est un entier supérieur ou égal à 1 et 1≤m≤J,
- un deuxième module de stockage MST2, par exemple une base de données, relié au gestionnaire de profils GP et contenant des informations d'identification des dispositifs de communication DCi, ces informations ayant été, lors d'un échange préalable établi entre l'utilisateur UTi du dispositif de communication DCi et la plateforme DGC, communiquées à cette dernière, puis enregistrées dans le deuxième module de stockage MST2 en association avec un des identifiants d'appel secondaires stockés dans le premier module de stockage MST1, par exemple l'identifiant d'appel secondaire IASₘ.

En prenant l'exemple du dispositif de communication DC1, de telles informations d'identification comprennent, d'une part, l'identifiant d'appel principal IAP1 du dispositif de communication DC1 (par exemple l'identifiant MSISDN du dispositif de communication DC1, le numéro de ligne fixe de l'utilisateur UT1 du dispositif de communication DC1, l'adresse IP ou bien l'adresse email permanente de l'utilisateur UT1), et d'autre part une ou plusieurs informations d'identification (label) que l'utilisateur UT1 souhaite associer à un identifiant d'appel secondaire (par exemple, un lien hypertexte vers le site internet de son entreprise, un logo, un nom, un titre...). Une telle gestion des profils par la plateforme DGC permet à un utilisateur appelant de choisir le « label » qui sera affiché sur l'écran du terminal appelé, s'il n'est pas encore connu de ce dernier.

Le deuxième module de stockage MST2 contient de telles informations pour tous les dispositifs de communication DCi ayant souscrit, auprès de la plateforme DGC, au service d'attribution d'identifiants d'appel secondaires.

Les interfaces de communication COM10, COM11, ainsi que le gestionnaire de profils GP, sont pilotés par le processeur PROC1 du circuit de traitement CT1.

Selon un mode de réalisation, les identifiants d'appel secondaires IAS₁, IAS₂,..., IASₘ,..., IAS_{J} précités font partie d'un pool attribué par l'administrateur de la plateforme DGC à un fournisseur de service partenaire auprès duquel s'est préalablement inscrit l'utilisateur UT1 du dispositif de communication DC1. Autrement dit, ce pool d'identifiants d'appels secondaires est réservé au service auquel a souscrit l'utilisateur UT1.

Un identifiant d'appel secondaire sélectionné dans le pool d'identifiants d'appel secondaires IAS₁, IAS₂,..., IASₘ,..., IAS_{J}, par exemple l'identifiant IASₘ, est associé aux informations d'identification relatives au dispositif de communication DC1, qui sont stockées dans le module de stockage MST2. Dans l'exemple représenté, l'identifiant d'appel secondaire sélectionné IASₘ est un numéro de téléphone. Toutefois, en variante et selon le contexte de la communication à établir, l'identifiant d'appel secondaire peut être un alias, un pseudo ou une identité réseau de type MSISDN, adresse IP, adresse email, adresse E.164, adresse SIP. En outre, cet identifiant d'appel secondaire peut être enregistré en association avec un identifiant IDS du service auprès duquel l'utilisateur UT1 du premier dispositif de communication DC1 a souscrit. A cet effet, cet identifiant secondaire a une durée de validité qui correspond par exemple à la durée de souscription à ce service ou bien à une durée prédéterminée, fixée au préalable par l'administrateur de la plateforme de gestion de communication DGC.

Le gestionnaire de profil GP est connecté à un centre de commutation CMT qui est apte à traiter le trajet de la communication établie depuis le dispositif de communication DC1 jusqu'au dispositif de communication DC2, tels que représentés sur la **figure 1****.** Les échanges entre le centre de commutation CMT et le gestionnaire de profils GP sont par exemple conformes au protocole SIP (de l'anglais « Session Initiation Protocol »).

Le centre de commutation CMT est bien connu en soi. Dans l'exemple représenté, il correspond par exemple à un centre de commutation mobile "MSC" (Mobile Switching Centre) d'un réseau de télécommunications mobile. Selon un autre mode de réalisation dans lequel le dispositif de communication DC1 serait de type fixe, le centre de commutation CMT pourrait être un commutateur local d'un réseau de télécommunications fixe. On notera que dans le réseau de télécommunications fixe, le commutateur local traite les appels locaux entre des abonnés d'un même commutateur ainsi que le départ et l'arrivée du trafic avec les autres commutateurs.

Le centre de commutation CMT est caractérisé par deux fonctions principales.

La première fonction principale est une fonction de contrôle d'appel qui correspond à la fonction centrale d'un commutateur téléphonique. Une telle fonction met en œuvre différentes opérations telles que le décodage d'informations d'adresse et le routage d'appels téléphoniques depuis un premier dispositif de communication appelant vers un deuxième dispositif de communication appelé. Une telle fonction est associée à certaines fonctionnalités d'appel telles que:
- une mise en attente de l'appel ;
- un transfert d'appel sur une messagerie vocale lorsque le dispositif de communication appelé n'est pas décroché ;
- une sonnerie particulière indiquant à l'appelant que son correspondant est déjà en ligne ou non joignable.

Cette première fonction traite par ailleurs le niveau de signalisation établi au cours de la communication entre les deux dispositifs de communication, c'est-à-dire le niveau correspondant à la signalisation des messages échangés via les différentes entités du réseau de communication.

La deuxième fonction principale est une fonction « Média » pour traiter toute la partie Média de la communication entre les deux dispositifs de communication. Une telle fonction correspond au niveau « Média » de traitement des données textuelles et/ou audio et/ou des images/vidéos échangées entre les deux dispositifs de communication lors de la communication.

Il convient de noter que même si dans le mode de réalisation représenté sur la **figure 2****,** le gestionnaire de profils GP et le centre de commutation CMT sont hébergés ensemble sur la plateforme de gestion de communication DGC, cet exemple n'est en rien limitatif.

En effet, dans une variante de réalisation, la plateforme de gestion de communication DGC pourrait contenir uniquement le gestionnaire de profils GP, le centre de commutation CMT étant hébergé à un autre endroit dans le réseau mais toujours connecté fonctionnellement au gestionnaire de profils GP.

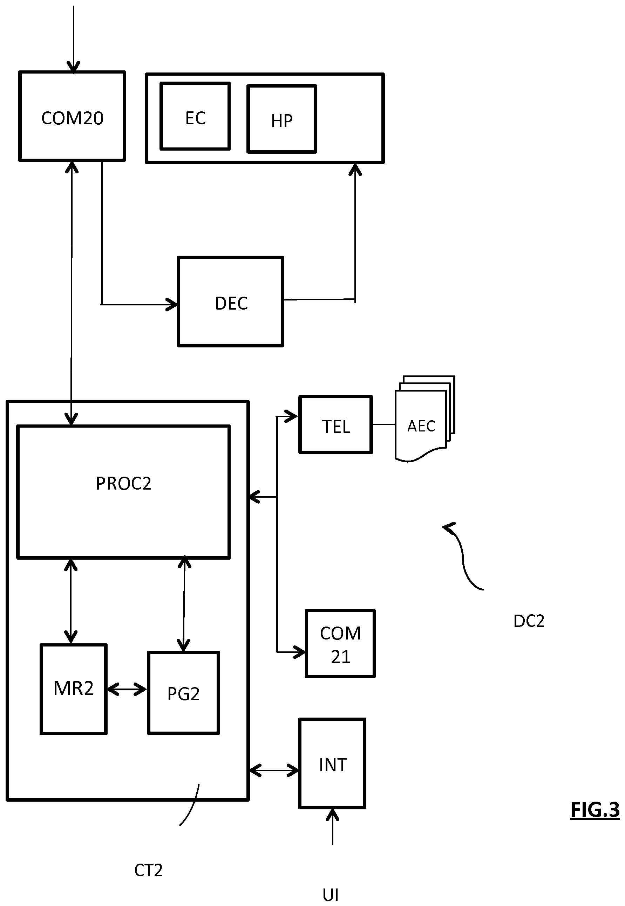

En relation avec la **figure 3****,** on considère maintenant la structure simplifiée du dispositif de communication DC1 ou DC2 selon un exemple de réalisation de l'invention.

Par exemple, le dispositif de communication DC2, ici un téléphone mobile, comprend des ressources physiques et/ou logicielles, en particulier un circuit de traitement CT2 pour mettre en œuvre les échanges avec la plateforme de gestion de communication DGC des **figures 1** **et** **2** préalablement à la communication à établir, puis une fois ladite communication établie.

Le circuit de traitement CT2 contient un processeur PROC2 piloté par un programme d'ordinateur PG2.

A l'initialisation, les instructions de code du programme d'ordinateur PG2 sont par exemple chargées dans une mémoire RAM, notée MR2, avant d'être exécutées par le circuit de traitement CT2.

Le dispositif de communication DC2 comprend principalement :
- une interface de communication COM20 qui est adaptée pour échanger des messages avec le gestionnaire de profils GP de la plateforme de gestion de communication DGC des **figures 1** **et** **2****,** via le réseau de communication RC2 ou un autre réseau de communication de données non représenté, lesdits messages étant conformes par exemple au protocole http (abréviation anglaise de « HyperText Transfer Protocol ») ;
- une interface de communication COM21 apte à établir/recevoir un appel via le réseau de communication et qui, selon le type de communication à établir, peut-être une interface de communication apte à émettre ou recevoir des appels vocaux ou bien une interface de communication apte à émettre ou recevoir des messages textuels de type SMS ou bien encore une interface de communication apte à émettre ou recevoir des messages multimédia de type MMS.

Le dispositif de communication DC2 comprend également :
- un module INT de traitement des interactions utilisateurs UI ;
- un écran de visualisation EC ;
- un haut-parleur HP ;
- une interface DEC de décodage audio/vidéo des contenus de type texte, audio, vidéo ou audiovisuel, ladite interface étant adaptée pour transmettre les signaux décodés à l'écran EC ou dans le haut-parleur HP ;
- un module TEL de téléchargement de contenus de type texte et/ou audio et/ou audiovisuel ou encore d'applications.

Plus particulièrement, l'interface de communication COM20 est configurée pour, préalablement à l'établissement de la communication avec le dispositif de communication appelant DC1, recevoir, en provenance de la plateforme de gestion de communication DGC, via l'interface de communication COM10 de cette dernière, un message qui comprend les informations d'identification associées au dispositif de communication DC1 et qui ont été préalablement enregistrées, comme expliqué plus haut, dans le module de stockage MST2 de la plateforme de gestion de communication DGC, à savoir :
- l'identifiant d'appel principal IAP1 du dispositif de communication DC1 appelant ;
- l'identifiant d'appel secondaire IAS1 du dispositif de communication DC1, utilisé pour initier la communication vers le terminal de communication appelé DC2;
- des informations d'identification de l'utilisateur UT1 du terminal de communication appelant DC1, que ce dernier a préalablement communiquées à la plateforme de gestion de communication DGC, pour qu'elles soient associées par cette dernière à son identifiant d'appel secondaire IAS1.

Une telle notification peut également comprendre des instructions de gestion du carnet d'adresses du dispositif de gestion de communication DC2, sous la forme d'opérations CRUD (pour l'anglais « Create, Read, Update, Delete »), pour permettre la mise à jour d'un contact existant associé à l'utilisateur UT1 (par exemple, pour ajouter, dans un contact existant, connu à partir d'un identifiant d'appel principal, un nouvel identifiant d'appel secondaire).

Si, de manière optionnelle, le terminal de communication DC2 souhaite souscrire, comme le terminal DC1, à un service d'allocation d'un ou plusieurs identifiant(s) d'appel secondaire(s), le module TEL de téléchargement du dispositif de communication DC2 est en outre configuré pour télécharger, depuis la plateforme DGC de gestion de communication, une application AEC dédiée à la gestion d'une communication conformément à un mode de réalisation de la présente invention.

Une telle application a notamment pour fonction de permettre à l'utilisateur UT2 du terminal de communication DC2 de se connecter à la plateforme de gestion de communication DGC, pour y configurer ses identifiants d'appel secondaires, et les informations d'identification (label) qu'ils souhaitent y associer. Ces informations sont transmises au gestionnaire de profil GP, et enregistrées en association dans le module de stockage MST2, comme décrit ci-dessus.

Elle a également pour fonction, lorsque l'utilisateur UT2 souhaite initier une communication à partir de l'un de ses identifiants d'appel secondaires IAS2, d'envoyer une requête d'établissement de communication vers la plateforme de gestion de communication DGC.

Les interfaces de communication COM20, COM21, le module de téléchargement TEL, ainsi que le module INT de traitement des interactions utilisateurs, sont pilotés par le processeur PROC2 du circuit de traitement CT2.

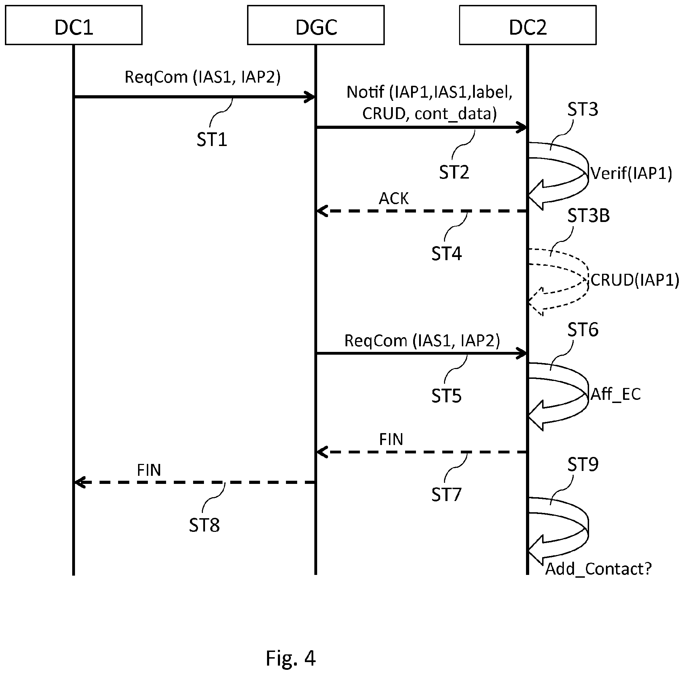

En référence à la **figure 4****,** on décrit maintenant le déroulement d'un procédé de gestion d'une communication selon un mode de réalisation de l'invention, tel que mis en œuvre dans la plateforme de gestion de communication DGC d'une part, et dans le terminal de communication appelé DC2.

Préalablement au déroulement de ce procédé, il est considéré que :
- l'application AEC d'établissement d'une communication à partir d'un identifiant d'appel secondaire a été préalablement téléchargée par le module de téléchargement TEL du dispositif de communication DC1;
- la plateforme DGC a alloué au dispositif de communication DC1 un ou plusieurs identifiant(s) d'appel secondaire(s) choisi(s) dans le pool d'identifiants d'appels secondaires IAS₁, IAS₂,...,IASₘ,..., IAS_{J} disponibles au moment de la requête de l'utilisateur UT1. L'identifiant d'appel secondaire sélectionné est par exemple l'identifiant IAS1 ;
- l'utilisateur UT1 du dispositif de communication DC1 a communiqué à la plateforme DGC de gestion de communication les informations d'identification qu'il souhaite associer à l'identifiant d'appel secondaire IAS1 de son dispositif de communication DC1 ;
- la plateforme DGC a enregistré, en association, dans le module MST2 du gestionnaire de profils GP, l'identifiant d'appel principal IAP1 du dispositif de communication DC1, son identifiant d'appel secondaire IAS1 et les informations d'identification associées (label) (ou, en variante, plusieurs identifiants d'appel secondaires, avec les différentes informations d'identification à associer à chacun d'entre eux).

De façon générale, le procédé de gestion d'une communication selon l'invention est mis en œuvre dans le cas où l'utilisateur UT1 du dispositif de communication DC1 souhaite initier une communication à partir d'un identifiant d'appel secondaire IAS1 de ce dernier à destination du dispositif de communication DC2 de la **figure 1****.**

A cet effet, au cours d'une étape ST1 représentée sur la **figure 4****,** le gestionnaire de profils GP de la plateforme de gestion de communication DGC reçoit en provenance du dispositif de communication DC1, via l'interface de communication COM10 de cette dernière, un message *ReqCom (IAS1, IAP2),* par exemple selon le protocole http, qui contient :
- une requête d'établissement d'une communication vers le terminal DC2, identifié par exemple par son identifiant d'appel principal IAP2 ;
- l'identifiant d'appel principal IAS1 du dispositif de communication DC1, que l'utilisateur UT1 a sélectionné pour initier cette communication.

A réception de cette requête, la plateforme DGC vérifie que l'utilisateur UT1 est authentifié en comparant les informations d'identification contenues dans le message reçu avec celles enregistrées dans le module de stockage MST2 de la **figure 2****,** et extrait de ce module MST2 l'identifiant d'appel principal IAP1 et les informations d'identification (*label*) associées à l'identifiant d'appel secondaire IAS1 pour ce terminal de communication DC1.

Au cours d'une étape ST2, la plateforme DGC émet, à destination du terminal de communication appelé DC2, une notification *Notif(IAP1, IAS1, label, CRUD, cont_data),* qui contient par exemple :
- l'identifiant d'appel principal IAP1 du terminal appelant DC1, par exemple son MSISDN ;
- l'identifiant d'appel secondaire IAS1, par exemple un numéro de téléphone secondaire, avec lequel l'utilisateur UT1 souhaite établir la communication ;
- des informations d'identification label que l'utilisateur UT1 a préalablement communiquées à la plateforme DGC pour qu'elles soient associées à l'identifiant d'appel secondaire IAS1, par exemple le logo de son entreprise, ou un lien hypertexte pointant vers le site internet de cette dernière ;
- des opérations CRUD, donnant instructions, le cas échéant, de mettre à jour un contact enregistré dans le carnet d'adresses du terminal de DC2 pour l'utilisateur UT1, en associant avec les données de mise à jour correspondantes *cont_data.*

Une telle notification *Notif(IAP1, IAS1, label, CRUD, cont_data)* peut présenter une structure de type JSON (pour l'anglais « JavaScript Object Notation », qui est un format de données textuelles permettant de représenter de l'information structurée), par exemple :
- {MSISDN: +33631258565, IAS1 : +33715458796, label : Mon Entreprise, create, {IAS1: +33715458796}}
- {MSISDN: +33631258565, IAS1 : +33715458796, label : Mon Entreprise, update, {cont_data : Mon Entreprise}}

Le premier exemple ci-dessus correspond au cas d'une notification avec un nouveau numéro de téléphone secondaire, utilisé pour établir une communication. Comme on le verra plus en détail par la suite, si le numéro de téléphone principale MSISDN de l'utilisateur UT1 est déjà enregistré dans le carnet d'adresses du terminal appelé DC2, les opérations « create, {IAS1: +33715458796}» permettent d'enregistrer ce numéro de téléphone secondaire IAS1 dans le contact associé à UT1.

Le deuxième exemple ci-dessus correspond, dans un contexte d'appel professionnel par exemple, à une mise à jour du nom de l'entreprise associée à UT1.

En référence à nouveau à la **figure 4****,** le terminal de communication appelé DC2 procède, à réception de la notification émise par la plateforme de gestion de communication DGC, à la vérification *Verif(IAP1)* de la présence de l'identifiant d'appel principal IAP1 du terminal appelant DC1 dans son carnet d'adresses, au cours d'une étape référencée ST3. Un tel carnet d'adresses est par exemple enregistré dans la mémoire MR2 du circuit de traitement CT2, et répertorie tous les contacts connus de l'utilisateur UT2. Cette vérification consiste par exemple à vérifier la présence du MSISDN du terminal appelant DC1 dans le carnet d'adresses.

A l'issue de cette vérification, le terminal de communication DC2 adresse un accusé de réception *ACK* à la plateforme de gestion de communication DGC au cours d'une étape référencée ST4.

En outre, si, lors de l'étape de vérification ST3, le terminal DC2 a identifié l'identifiant d'appel principal IAP1 comme étant déjà enregistré dans son carnet d'adresses, il met alors à jour le contact correspondant associé à l'utilisateur UT1, au cours d'une étape ST3B *CRUD(IAP1),* à partir des instructions CRUD contenues dans la notification reçue au cours de l'étape ST2, et des données de contact correspondantes *cont_data.* Par exemple, il ajoute, dans le contact associé à l'utilisateur UT1, le nouveau numéro de téléphone secondaire IAS1.

Au cours d'une étape référencée ST5, la plateforme de gestion de communication DGC route alors, grâce au centre de commutation CMT, la communication entrante *ReqCom(IAS1, IAP2)* initiée par le terminal appelant DC1 vers le terminal appelé DC2.

Deux situations peuvent alors se produire, lorsque le terminal de communication appelé DC2 reçoit cet appel entrant :
- si, lors de l'étape de vérification ST3, le terminal DC2 a identifié l'identifiant d'appel principal IAP1 comme étant déjà enregistré dans son carnet d'adresses, il affiche alors, lors d'une étape ST6 *Aff_EC,* les informations de contact enregistrées en association avec ce MSISDN dans le carnet d'adresses (par exemple un nom/prénom de l'utilisateur UT1) (éventuellement après mise à jour de ces dernières lors de l'étape ST3B) ;
- si en revanche, lors de l'étape de vérification ST3, il a été conclu que ce MSISDN était inconnu du terminal appelé DC2, ce dernier affiche sur l'écran EC, lors d'une étape ST6 *Aff_EC,* les informations d'identification *label* contenues dans la notification *Notif(IAP1, IAS1, label, CRUD, cont_data)* reçue à l'étape ST2.

Dans un cas comme dans l'autre, l'utilisateur UT2 dispose donc d'informations sur l'identité de l'utilisateur UT1 qui cherche à le joindre et ce, bien qu'il ne connaisse pas le numéro de téléphone secondaire utilisé par ce dernier. Il peut alors prendre une décision éclairée quant à l'acceptation ou au rejet de cette communication entrante.

En ce qui concerne ces informations d'identifications (label), on notera que plusieurs cas d'usage peuvent se présenter :
- dans un contexte professionnel, elles peuvent permettre à l'utilisateur UT1 d'annoncer à l'utilisateur UT2 qu'il représente la société *Mon Entreprise,* même s'il ne fait pas partie de la liste de contacts du terminal appelé DC2 ;
- dans un contexte privé, elles peuvent permettre à l'utilisateur UT1 d'utiliser des numéros de téléphone différents pour différents groupes de contacts, par exemple son cercle familial, les réseaux sociaux, et son groupe d'amis ;
- elles peuvent enfin permettre à l'utilisateur UT1 de disposer de deux profils, un profil professionnel associé à certains identifiants d'appel, et un profil privé associé à certains autres, et à basculer de l'un à l'autre de ces profils, tout en conservant le même terminal de communication DC1.

A l'issue de l'appel, des messages de fin de communication *FIN* sont transmis par le terminal appelé DC2 vers la plateforme de gestion de communication DGC au cours d'une étape ST7, puis par la plateforme de gestion de communication DGC vers le terminal appelant DC1 au cours d'une étape ST8.

Au cours d'une étape référencée ST9, si l'identifiant d'appel principal IAP1 du terminal appelant DC1 n'était pas connu du carnet d'adresses du terminal appelé DC2, ce dernier peut alors afficher, sous forme de message pop-up sur l'écran EC, une proposition *Add_Contact?* d'enregistrer ce nouveau contact UT1 dans le carnet d'adresses.

Ainsi, lors d'un éventuel prochain appel, même s'il est initié avec un autre identifiant d'appel secondaire du terminal DC1, l'utilisateur UT2 reconnaîtra la personne qui cherche à le joindre.

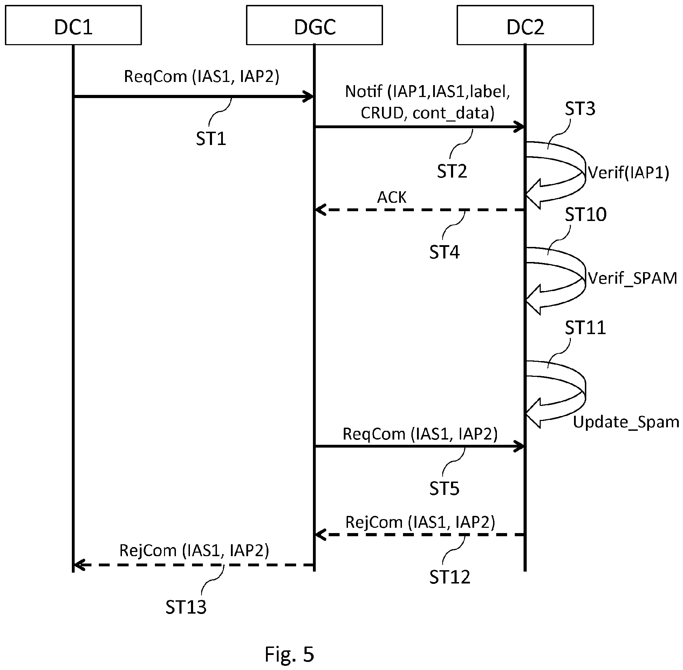

Ceci est particulièrement utile dans le cadre de la lutte anti-spams, par le terminal appelé DC2. En effet, le procédé de gestion de l'invention permet avantageusement de propager les mécanismes connus d'antispam et les procédures de blocages d'appels aux identifiants d'appel secondaires, comme illustrés sur la **figure 5****.**

Sur cette figure, les étapes identiques à celles de la **figure 4** sont désignées par les mêmes références et ne seront pas décrites ici plus en détail, par souci de simplification. Si nécessaire, on pourra se référer à la description de la **figure 4** ci-avant.

Selon le procédé de gestion de communication de la **figure 4****,** le terminal appelé DC2 procède, lors d'une étape ST3, à la vérification de l'existence de l'identifiant d'appel principal IAP1 du terminal appelant DC1 dans son carnet d'adresses.

Les informations fournies dans la notification reçues à l'étape ST2 lui permettent en effet d'établir une correspondance entre l'identifiant d'appel principal IAP1, par exemple le MSISDN, et l'identifiant d'appel secondaire IAS1 utilisé par le terminal appelant DC1.

Grâce à cette corrélation, si l'identifiant d'appel principal a précédemment été identifié comme une source de spam (en français, pourriel), ou a précédemment été bloqué par l'utilisateur UT2, il est possible de bloquer également l'identifiant d'appel secondaire IAS1, ou de le marquer comme un numéro indésirable.

Ainsi, lors d'une étape référencée ST10 *Verif_SPAM,* le terminal DC2 vérifie automatiquement la présence de l'identifiant d'appel principal IAP1 ou de l'identifiant d'appel secondaire IAS1 dans une liste d'identifiants d'appel jugés indésirables.

Si par exemple le numéro de téléphone principal IAP1 a été précédemment identifié comme indésirable, et enregistré comme tel dans le terminal DC2, ce dernier met à jour, au cours d'une étape référencée ST11 *Update_Spam,* la liste d'identifiants d'appel indésirables en y ajoutant l'identifiant d'appel secondaire IAS1.

A réception ST5 de la communication entrante *ReqCom(IAS1, IAP2),* le terminal DC2 peut automatiquement procéder à son rejet *RejCom(IAS1, IAP2)* au cours d'une étape référencée ST12. Ce rejet est propagé de la plateforme de gestion de communication DGC au terminal appelant DC1 au cours d'une étape référencée ST13.

Cette solution ne nécessite aucune intervention manuelle de la part de l'utilisateur UT2 pour bloquer un identifiant d'appel secondaire s'il a déjà identifié que l'identifiant d'appel principal ou un autre identifiant d'appel secondaire du même terminal appelant était indésirable. Ceci constitue donc une solution particulièrement efficace pour lutter contre les spams, dans le cas où le terminal appelant change régulièrement de numéros de téléphone secondaires.

Plus généralement, la solution de l'invention présente de multiples avantages, tant du point de vue du terminal appelant que du terminal appelé.

Du point de vue du terminal appelant :
- l'utilisateur UT1 peut choisir précisément le « label » qu'il veut voir afficher sur l'écran du terminal appelé quand il initie une communication à partir d'un numéro de téléphone secondaire ;
- quel que soit le numéro de téléphone secondaire utilisé pour initier l'appel, les utilisateurs des terminaux appelés peuvent identifier l'utilisateur UT1 appelant, qu'ils le connaissent ou non ;
- l'utilisateur UT1 n'a pas besoin d'informer au préalable ses amis, sa famille, ou ses contacts professionnels qu'il dispose d'un numéro de téléphone secondaire ;
- les « labels » associés aux numéros de téléphone secondaires de l'appelant sont gérés de façon homogène et uniforme pour l'ensemble des terminaux appelés, qui les voient tous s'afficher sous la même forme.

Du point de vue du terminal appelé :
- si le terminal appelant fait déjà partie des contacts du carnet d'adresses, l'utilisateur UT2 n'a pas besoin de faire des démarches d'enregistrement de ses différents numéros de téléphone secondaires, ceci est fait de façon automatique et transparente ;
- le terminal appelé n'a pas besoin de gérer les informations d'identification associées aux numéros de téléphone secondaires, ni de disposer d'un service d'annuaire inversé ;
- l'utilisateur appelé UT2 n'a pas besoin d'enregistrer un nouveau numéro inconnu dans son carnet d'adresses, pour qu'il puisse être affiché lors d'un prochain appel. Ceci se fait automatiquement, par affichage d'un message pop-up proposant cet ajout automatique, à la fin de l'appel reçu.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de gestion d'une communication entre un terminal de communication appelant (DC1) et un terminal de communication appelé (DC2),
le terminal de communication appelant disposant d'un identifiant d'appel principal (IAP1) permanent et d'au moins un identifiant d'appel secondaire (IAS1) temporaire enregistré, en association avec ledit identifiant d'appel principal, dans au moins un dispositif de gestion de communication (DGC), lesdits identifiants d'appel principal et secondaire permettant tous les deux d'initier une communication à destination dudit terminal appelé (DC2) ou d'établir un routage d'une communication vers le terminal appelant (DC1),
**caractérisé en ce que,** lorsque ledit terminal de communication appelant (DC1) initie une communication, à destination dudit terminal de communication appelé (DC2), à partir dudit au moins un identifiant d'appel secondaire, ledit au moins un dispositif de gestion de communication (DGC) met en œuvre:
- une émission (ST2), vers ledit terminal appelé, préalablement à l'initiation de ladite communication, d'une notification comprenant au moins ledit identifiant d'appel principal (IAP1), ledit au moins un identifiant d'appel secondaire (IAS1), et au moins une information d'identification (*label*) d'un utilisateur (UT1) dudit terminal appelant associée audit identifiant d'appel secondaire ;
- un routage (ST5) de ladite communication vers ledit terminal appelé en utilisant ledit au moins un identifiant d'appel secondaire,
**et en ce qu'**il comprend en outre, préalablement à l'initiation de ladite communication, un enregistrement en association avec ledit au moins un identifiant d'appel secondaire (IAS1) dudit identifiant d'appel principal (IAP1) et de ladite au moins une information d'identification (label) par ledit dispositif de gestion de communication (DGC).

2. Procédé selon la revendication 1, **caractérisé en ce que** ladite notification comprend également une instruction (CRUD) de gestion d'un contact associé audit utilisateur dudit terminal appelant, ladite instruction de gestion appartenant au groupe comprenant :
- une instruction de création ;
- une instruction de lecture ;
- une instruction de mise à jour ;
- une instruction de suppression.

3. Programme d'ordinateur comprenant des instructions de code de programme pour l'exécution des étapes du procédé de gestion d'une communication selon l'une quelconque des revendications 1 et 2, lorsque ledit programme est exécuté par un processeur d'un dispositif de gestion de communication.

4. Support d'enregistrement lisible par un ordinateur sur lequel est enregistré un programme d'ordinateur comprenant des instructions de code de programme pour l'exécution des étapes du procédé de gestion d'une communication selon l'une quelconque des revendications 1 et 2, lorsque ledit programme est exécuté par un processeur d'un dispositif de gestion de communication.

5. Dispositif de gestion de communication (DGC) pour l'établissement d'une communication entre un terminal de communication appelant (DC1) et un terminal de communication appelé (DC2),
le dispositif de gestion de communication (DGC) comprenant un circuit de traitement (CT1) qui est configuré pour enregistrer, en association, un identifiant d'appel principal (IAP1) permanent et au moins un identifiant d'appel secondaire (IAS1) temporaire dudit terminal de communication appelant (DC1), lesdits identifiants d'appel principal et secondaire permettant tous les deux d'initier une communication à destination dudit le terminal appelé (DC2) ou d'établir un routage de ladite communication vers le terminal appelant (DC1),
**caractérisé en ce que** ledit circuit de traitement (CT1) est également configuré pour :
- recevoir (ST1) une communication initiée par ledit terminal de communication appelant, à partir dudit au moins un identifiant d'appel secondaire, à destination dudit terminal de communication appelé ;
- émettre (ST2), vers ledit terminal appelé, préalablement à ladite réception de ladite communication, une notification comprenant au moins ledit identifiant d'appel principal, ledit au moins un identifiant d'appel secondaire, et au moins une information d'identification d'un utilisateur dudit terminal appelant associée audit identifiant d'appel secondaire ;
- router (ST5) ladite communication vers ledit terminal appelé en utilisant ledit au moins un identifiant d'appel secondaire,
**et en ce qu'**il comprend en outre, un module de stockage (MST2) configuré pour, préalablement à l'initiation de ladite communication, enregistrer en association avec ledit au moins un identifiant d'appel secondaire (IAS1) ledit identifiant d'appel principal (IAP1) et ladite au moins une information d'identification (label).

6. Procédé de gestion d'une communication entrante par un terminal de communication appelé (DC2),
ladite communication entrante étant initiée par un terminal de communication appelant (DC1), disposant d'un identifiant d'appel principal (IAP1) permanent et d'au moins un identifiant d'appel secondaire (IAS1) temporaire enregistré, en associant avec ledit identifiant d'appel principal, dans au moins un dispositif de gestion de communication (DGC),
**caractérisé en ce que,** lorsque ladite communication entrante est initiée à partir dudit au moins un identifiant d'appel secondaire, ledit terminal de communication appelé met en œuvre:
- une réception (ST2) d'une notification préalablement à l'initiation de ladite communication comprenant au moins ledit identifiant d'appel principal, ledit au moins un identifiant d'appel secondaire, et au moins une information d'identification d'un utilisateur dudit terminal appelant associée audit identifiant d'appel secondaire ;
- une vérification (ST3) de présence dudit identifiant d'appel principal dans un carnet d'adresses dudit terminal de communication appelé ;
- sur réception (ST5) de ladite communication entrante :
o en cas de présence dudit identifiant d'appel principal dans ledit carnet d'adresses, un affichage (ST6) d'un identifiant d'utilisateur mémorisé dans ledit carnet d'adresses en association avec ledit identifiant d'appel présent ;
o en cas d'absence dudit identifiant d'appel principal et dudit au moins un identifiant d'appel secondaire dans ledit carnet d'adresses, un affichage (ST6) de ladite au moins une information d'identification comprise dans ladite notification reçue.

7. Procédé de gestion d'une communication entrante selon la revendication 6, **caractérisé en ce que,** en cas de présence dudit identifiant d'appel principal dans ledit carnet d'adresses, il met à jour (ST3B), dans ledit carnet d'adresses, un contact associé à un utilisateur dudit terminal appelant, par ajout dudit au moins un identifiant d'appel secondaire et/ou de ladite information d'identification compris dans ladite notification reçue.

8. Procédé de gestion d'une communication entrante selon l'une quelconque des revendications 6 et 7, **caractérisé en ce que,** en cas d'absence dudit identifiant d'appel principal et dudit au moins un identifiant d'appel secondaire dans ledit carnet d'adresses, il comprend également, à l'issue de ladite communication entrante, un affichage (ST9) d'un message proposant d'enregistrer ladite au moins une information d'identification, en association avec ledit au moins un identifiant d'appel secondaire et/ou ledit identifiant d'appel principal, dans ledit carnet d'adresses.

9. Procédé de gestion d'une communication entrante selon l'une quelconque des revendications 6 à 8, **caractérisé en ce qu'**il comprend également une vérification que ledit identifiant d'appel principal et/ou ledit au moins un identifiant d'appel secondaire est un identifiant d'appel bloqué, et, dans l'affirmative, un rejet de ladite communication entrante initiée à partir dudit au moins un identifiant d'appel secondaire.

10. Programme d'ordinateur comprenant des instructions de code de programme pour l'exécution des étapes du procédé de gestion d'une communication entrante selon l'une quelconque des revendications 6 à 9, lorsque ledit programme est exécuté par un processeur d'un terminal de communication appelé.

11. Support d'enregistrement lisible par un ordinateur sur lequel est enregistré un programme d'ordinateur comprenant des instructions de code de programme pour l'exécution des étapes du procédé de gestion d'une communication entrante selon l'une quelconque des revendications 6 à 9, lorsque ledit programme est exécuté par un processeur d'un terminal de communication appelé.

12. Terminal de communication (DC2), comprenant un circuit de traitement (CT2) configuré pour traiter une communication entrante initiée par un terminal de communication appelant (DC1), disposant d'un identifiant d'appel principal (IAP1) permanent et d'au moins un identifiant d'appel secondaire (IAS1) temporaire enregistré, en associant avec ledit identifiant d'appel principal, dans au moins un dispositif de gestion de communication (DGC),
**caractérisé en ce que,** ledit circuit de traitement (CT2) est également configuré, lorsque ladite communication entrante est initiée à partir dudit au moins un identifiant d'appel secondaire, pour :
- recevoir (ST2) une notification préalablement à l'initiation de ladite communication comprenant au moins ledit identifiant d'appel principal, ledit au moins un identifiant d'appel secondaire, et au moins une information d'identification d'un utilisateur dudit terminal appelant associée audit identifiant d'appel secondaire ;
- effectuer une vérification (ST3) de présence dudit identifiant d'appel principal dans un carnet d'adresses dudit terminal de communication appelé ;
- sur réception (ST5) de ladite communication entrante :
o en cas de présence dudit identifiant d'appel principal dans ledit carnet d'adresses, afficher (ST6) un identifiant d'utilisateur mémorisé dans ledit carnet d'adresses en association avec ledit identifiant d'appel présent ;
o en cas d'absence dudit identifiant d'appel principal et dudit au moins un identifiant d'appel secondaire dans ledit carnet d'adresses, afficher (ST6) ladite au moins une information d'identification comprise dans ladite notification reçue.

## Patentansprüche

1. Verfahren zur Verwaltung einer Kommunikation zwischen einem anrufenden Kommunikationsendgerät (DC1) und einem angerufenen Kommunikationsendgerät (DC2),
wobei das anrufende Kommunikationsendgerät über eine permanente Hauptanrufskennung (IAP1) und mindestens eine temporäre Nebenanrufskennung (IAS1), die in Verbindung mit der Hauptanrufskennung in mindestens einer Kommunikationsverwaltungsvorrichtung (DGC) aufgezeichnet ist, verfügt, wobei es die Haupt- und die Nebenanrufskennung beide ermöglichen, eine Kommunikation mit dem angerufenen Endgerät (DC2) zu initiieren oder eine Weiterleitung einer Kommunikation zu dem anrufenden Endgerät (DC1) herzustellen,
**dadurch gekennzeichnet, dass,** wenn das anrufende Kommunikationsendgerät (DC1) eine Kommunikation mit dem angerufenen Kommunikationsendgerät (DC2) auf Grundlage der mindestens einen Nebenanrufskennung initiiert, die mindestens eine Kommunikationsverwaltungsvorrichtung (DGC) Folgendes umsetzt:
- Aussenden (ST2), zu dem angerufenen Endgerät, vor der Initiierung der Kommunikation, einer Nachricht, die mindestens die Hauptanrufskennung (IAP1), die mindestens eine Nebenanrufskennung (IAS1) und mindestens eine Identifikationsinformation (*label*) eines Nutzers (UT1) des anrufenden Endgeräts, die mit der Nebenanrufskennung verbunden ist, beinhaltet;
- Weiterleiten (ST5) der Kommunikation zu dem angerufenen Endgerät unter Verwendung der mindestens einen Nebenanrufskennung,
**und dass** es ferner vor der Initiierung der Kommunikation ein Aufzeichnen, in Verbindung mit der mindestens einen Nebenanrufskennung (IAS1), der Hauptanrufskennung (IAP1) und der mindestens einen Identifikationsinformation (label) durch die Kommunikationsverwaltungsvorrichtung (DGC) beinhaltet.

2. Verfahren nach Anspruch 1, **dadurch gekennzeichnet, dass** die Nachricht ferner eine Anweisung (CRUD) zur Verwaltung eines Kontakts, der mit dem Nutzer des anrufenden Endgeräts verbunden ist, beinhaltet, wobei die Verwaltungsanweisung zu der Gruppe gehört, die Folgendes beinhaltet:
- eine Erstellungsanweisung;
- eine Leseanweisung;
- eine Aktualisierungsanweisung;
- eine Löschanweisung.

3. Computerprogramm, das Programmcodeanweisungen zur Ausführung der Schritte des Verfahrens zur Verwaltung einer Kommunikation nach einem beliebigen der Ansprüche 1 und 2 beinhaltet, wenn das Programm von einem Prozessor einer Kommunikationsverwaltungsvorrichtung ausgeführt wird.

4. Computerlesbares Aufzeichnungsmedium, auf dem ein Computerprogramm aufgezeichnet ist, das Programmcodeanweisungen zur Ausführung der Schritte des Verfahrens zur Verwaltung einer Kommunikation nach einem beliebigen der Ansprüche 1 und 2 beinhaltet, wenn das Programm von einem Prozessor einer Kommunikationsverwaltungsvorrichtung ausgeführt wird.

5. Kommunikationsverwaltungsvorrichtung (DGC) zur Herstellung einer Kommunikation zwischen einem anrufenden Kommunikationsendgerät (DC1) und einem angerufenen Kommunikationsendgerät (DC2),
wobei die Kommunikationsverwaltungsvorrichtung (DGC) eine Verarbeitungsschaltung (CT1) beinhaltet, die dazu konfiguriert ist, eine permanente Hauptanrufskennung (IAP1) und mindestens eine temporäre Nebenanrufskennung (IAS1) des anrufenden Kommunikationsendgeräts (DC1) in Verbindung miteinander aufzuzeichnen, wobei es die Haupt- und die Nebenanrufskennung beide ermöglichen, eine Kommunikation mit dem angerufenen Endgerät (DC2) zu initiieren oder eine Weiterleitung der Kommunikation zu dem anrufenden Endgerät (DC1) herzustellen,
**dadurch gekennzeichnet, dass** die Verarbeitungsschaltung (CT1) ferner zu Folgendem konfiguriert ist:
- Empfangen (ST1) einer Kommunikation, die durch das anrufende Kommunikationsendgerät initiiert wird, auf Grundlage der mindestens einen Nebenanrufskennung, für das angerufene Kommunikationsendgerät;
- Aussenden (ST2), zu dem angerufenen Endgerät, vor dem Empfang der Kommunikation, einer Nachricht, die mindestens die Hauptanrufskennung, die mindestens eine Nebenanrufskennung und mindestens eine Identifikationsinformation eines Nutzers des anrufenden Endgeräts, die mit der Nebenanrufskennung verbunden ist, beinhaltet;
- Weiterleiten (ST5) der Kommunikation zu dem angerufenen Endgerät unter Verwendung der mindestens einen Nebenanrufskennung,
**und dass** sie ferner ein Speicherungsmodul (MST2) beinhaltet, das dazu konfiguriert ist, vor der Initiierung der Kommunikation die Hauptanrufskennung (IAP1) und die mindestens eine Identifikationsinformation (label) in Verbindung mit der mindestens einen Nebenanrufskennung (IAS1) aufzuzeichnen.

6. Verfahren zur Verwaltung einer eingehenden Kommunikation durch ein angerufenes Kommunikationsendgerät (DC2),
wobei die eingehende Kommunikation durch ein anrufendes Kommunikationsendgerät (DC1) initiiert wird, das über eine permanente Hauptanrufskennung (IAP1) und mindestens eine temporäre Nebenanrufskennung (IAS1), die in Verbindung mit der Hauptanrufskennung in mindestens einer Kommunikationsverwaltungsvorrichtung (DGC) aufgezeichnet ist, verfügt,
**dadurch gekennzeichnet, dass,** wenn die eingehende Kommunikation auf Grundlage der mindestens einen Nebenanrufskennung initiiert wird, das angerufene Kommunikationsendgerät Folgendes umsetzt:
- Empfangen (ST2) einer Nachricht vor der Initiierung der Kommunikation, die mindestens die Hauptanrufskennung, die mindestens eine Nebenanrufskennung und mindestens eine Identifikationsinformation eines Nutzers des anrufenden Endgeräts, die mit der Nebenanrufskennung verbunden ist, beinhaltet;
- Prüfen (ST3), ob die Hauptanrufskennung in einem Adressbuch des angerufenen Kommunikationsendgeräts vorhanden ist;
- bei Empfang (ST5) der eingehenden Kommunikation:
o falls die Hauptanrufskennung in dem Adressbuch vorhanden ist, Anzeigen (ST6) einer Nutzerkennung, die in Verbindung mit der vorhandenen Anrufskennung in dem Adressbuch gespeichert ist;
o falls die Hauptanrufskennung und die mindestens eine Nebenanrufskennung in dem Adressbuch nicht vorhanden sind, Anzeigen (ST6) der mindestens einen Identifikationsinformation, die in der empfangenen Nachricht enthalten ist.

7. Verfahren zur Verwaltung einer eingehenden Kommunikation nach Anspruch 6, **dadurch gekennzeichnet, dass** es, falls die Hauptanrufskennung in dem Adressbuch vorhanden ist, einen Kontakt, der mit einem Nutzer des anrufenden Endgeräts verbunden ist, in dem Adressbuch aktualisiert (ST3B), indem es die mindestens eine Nebenanrufskennung und/oder die Identifikationsinformation, die in der empfangenen Nachricht enthalten sind, hinzufügt.

8. Verfahren zur Verwaltung einer eingehenden Kommunikation nach einem beliebigen der Ansprüche 6 und 7, **dadurch gekennzeichnet, dass** es, falls die Hauptanrufskennung und die mindestens eine Nebenanrufskennung in dem Adressbuch nicht vorhanden sind, nach Abschluss der eingehenden Kommunikation ferner ein Anzeigen (ST9) einer Meldung beinhaltet, welche vorschlägt, die mindestens eine Identifikationsinformation in Verbindung mit der mindestens einen Nebenanrufskennung und/oder der Hauptanrufskennung in dem Adressbuch aufzuzeichnen.

9. Verfahren zur Verwaltung einer eingehenden Kommunikation nach einem beliebigen der Ansprüche 6 bis 8, **dadurch gekennzeichnet, dass** es ferner eine Prüfung, ob die Hauptanrufskennung und/oder die mindestens eine Nebenanrufskennung eine gesperrte Anrufskennung sind, und falls ja, eine Zurückweisung der eingehenden Kommunikation, die auf Grundlage der mindestens einen Nebenanrufskennung initiiert wird, beinhaltet.

10. Computerprogramm, das Programmcodeanweisungen zur Ausführung der Schritte des Verfahrens zur Verwaltung einer eingehenden Kommunikation nach einem beliebigen der Ansprüche 6 bis 9 beinhaltet, wenn das Programm von einem Prozessor eines angerufenen Kommunikationsendgeräts ausgeführt wird.

11. Computerlesbares Aufzeichnungsmedium, auf dem ein Computerprogramm aufgezeichnet ist, das Programmcodeanweisungen zur Ausführung der Schritte des Verfahrens zur Verwaltung einer eingehenden Kommunikation nach einem beliebigen der Ansprüche 6 bis 9 beinhaltet, wenn das Programm von einem Prozessor eines angerufenen Kommunikationsendgeräts ausgeführt wird.

12. Kommunikationsendgerät (DC2), das eine Verarbeitungsschaltung (CT2) beinhaltet, die dazu konfiguriert ist, eine eingehende Kommunikation zu verarbeiten, die durch ein anrufendes Kommunikationsendgerät (DC1) initiiert wird, das über eine permanente Hauptanrufskennung (IAP1) und mindestens eine temporäre Nebenanrufskennung (IAS1), die in Verbindung mit der Hauptanrufskennung in mindestens einer Kommunikationsverwaltungsvorrichtung (DGC) aufgezeichnet ist, verfügt,
**dadurch gekennzeichnet, dass** die Verarbeitungsschaltung (CT2), wenn die eingehende Kommunikation auf Grundlage der mindestens einen Nebenanrufskennung initiiert wird, ferner zu Folgendem konfiguriert ist:
- Empfangen (ST2) einer Nachricht vor der Initiierung der Kommunikation, die mindestens die Hauptanrufskennung, die mindestens eine Nebenanrufskennung und mindestens eine Identifikationsinformation eines Nutzers des anrufenden Endgeräts, die mit der Nebenanrufskennung verbunden ist, beinhaltet;
- Durchführen einer Prüfung (ST3), ob die Hauptanrufskennung in einem Adressbuch des angerufenen Kommunikationsendgeräts vorhanden ist;
- bei Empfang (ST5) der eingehenden Kommunikation:
o falls die Hauptanrufskennung in dem Adressbuch vorhanden ist, Anzeigen (ST6) einer Nutzerkennung, die in Verbindung mit der vorhandenen Anrufskennung in dem Adressbuch gespeichert ist;
o falls die Hauptanrufskennung und die mindestens eine Nebenanrufskennung in dem Adressbuch nicht vorhanden sind, Anzeigen (ST6) der mindestens einen Identifikationsinformation, die in der empfangenen Nachricht enthalten ist.

## Claims

1. Method for management of a communication between a calling communication terminal (DC1) and a called communication terminal (DC2), the calling communication terminal being provided with a permanent main call identifier (IAP1) and at least one temporary secondary call identifier (IAS1) stored, in association with said main call identifier, in at least one communication management device (DGC), said main and secondary call identifiers both allowing initiation of a communication intended for said called terminal (DC2) or a communication to be routed to the calling terminal (DC1), **characterized in that,** when said calling communication terminal (DC1) initiates a communication, intended for said called communication terminal (DC2), using said at least one secondary call identifier, said at least one communication management device (DGC):
- sends (ST2), to said called terminal, prior to the initiation of said communication, a notification comprising at least said main call identifier (IAP1), said at least one secondary call identifier (IAS1), and at least one identification datum (*label*) of a user (UT1) of said calling terminal, which identification datum is associated with said secondary call identifier;
- routes (ST5) said communication to said called terminal using said at least one secondary call identifier,
**and in that** it further comprises, prior to the initiation of said communication, storage in association with said at least one secondary call identifier (IAS1) of said main call identifier (IAP1) and of said at least one identification datum (label) by said communication management device (DGC).

2. Method according to Claim 1, **characterized in that** said notification also comprises an instruction (CRUD) for management of a contact associated with said user of said calling terminal, said management instruction belonging to the group comprising:
- a creation instruction;
- a read instruction;
- an update instruction;
- a deletion instruction.

3. Computer program comprising program code instructions for the execution of the steps of the method for management of a communication according to either one of Claims 1 and 2, when said program is executed by a processor of a communication management device.

4. Storage medium readable by a computer on which is stored a computer program comprising program code instructions for the execution of the steps of the method for management of a communication according to either one of Claims 1 and 2, when said program is executed by a processor of a communication management device.

5. Communication management device (DGC) for setting up a communication between a calling communication terminal (DC1) and a called communication terminal (DC2), the communication management device (DGC) comprising a processing circuit (CT1) that is configured to store, in association, a permanent main call identifier (IAP1) and at least one temporary secondary call identifier (IAS1) of said calling communication terminal (DC1), said main and secondary call identifiers both allowing initiation of a communication intended for said called terminal (DC2) or a communication to be routed to said calling terminal (DC1),
**characterized in that,** said processing circuit (CT1) is also configured to:
- receive (ST1) a communication initiated by said calling communication terminal, using said at least one secondary call identifier, and intended for said called communication terminal;
- send (ST2), to said called terminal, prior to said reception of said communication, a notification comprising at least said main call identifier, said at least one secondary call identifier, and at least one identification datum of a user of said calling terminal, which identification datum is associated with said secondary call identifier;
- route (ST5) said communication to said called terminal using said at least one secondary call identifier,
**and in that** it further comprises, a storage module (MST2) configured to, prior to the initiation of said communication, store in association with said at least one secondary call identifier (IAS1) said main call identifier (IAP1) and said at least one identification datum (label).

6. Method for management of an incoming communication by a called communication terminal (DC2), said incoming communication being initiated by a calling communication terminal (DC1), which has been provided with a permanent main call identifier (IAP1) and at least one temporary secondary call identifier (IAS1) stored, in association with said main call identifier, in at least one communication management device (DGC),
**characterized in that,** when said incoming communication is initiated using said at least one secondary call identifier, said called communication terminal:
- receives (ST2) a notification prior to the initiation of said communication comprising at least said main call identifier, said at least one secondary call identifier, and at least one identification datum of a user of said calling terminal, which identification datum is associated with said secondary call identifier;
- verifies (ST3) the presence of said main call identifier in an address book of said called communication terminal;
- on reception (ST5) of said incoming communication:
o in case of presence of said main call identifier in said address book, displays (ST6) a user identifier stored in the address book in association with said present call identifier;
o in case of absence of said main call identifier and of said at least one secondary call identifier in said address book, displays (ST6) said at least one identification datum comprised in said received notification.

7. Method for management of an incoming communication according to Claim 6, **characterized in that,** in case of presence of said main call identifier in said address book, it updates (ST3B) in said address book, a contact associated with a user of said calling terminal, by adding said at least one secondary call identifier and/or said identification datum comprised in said received notification.

8. Method for management of an incoming communication according to either one of Claims 6 and 7, **characterized in that,** in case of absence of said main call identifier and of said at least one secondary call identifier in said address book, is also comprises, at the end of the incoming communication, displaying (ST9) a message proposing to store said at least one identification datum, in association with said at least one secondary call identifier and/or said main call identifier, in said address book.

9. Method for management of an incoming communication according to any one of Claims 6 to 8, **characterized in that** it also comprises verifying whether said main call identifier and/or said at least one secondary call identifier is a blocked call identifier, and, if so, rejecting said incoming communication initiated using said at least one secondary call identifier.

10. Computer program comprising program code instructions for the execution of the steps of the method for management of an incoming communication according to any one of Claims 6 to 9, when said program is executed by a processor of a called communication terminal.

11. Storage medium readable by a computer on which is stored a computer program comprising program code instructions for the execution of the steps of the method for management of an incoming communication according to any one of Claims 6 to 9, when said program is executed by a processor of a called communication terminal.

12. Communication terminal (DC2), comprising a processing circuit (CT2) that is configured to process an incoming communication initiated by a calling communication terminal (DC1), which has been provided with a permanent main call identifier (IAP1) and at least one temporary secondary call identifier (IAS1) stored, in association with said main call identifier, in at least one communication management device (DGC), **characterized in that,** said a processing circuit (CT2) is also configured, when said incoming communication is initiated using said at least one secondary call identifier, to:
- receive (ST2) a notification prior to the initiation of said communication comprising at least said main call identifier, said at least one secondary call identifier, and at least one identification datum of a user of said calling terminal, which identification datum is associated with said secondary call identifier;
- verify (ST3) the presence of said main call identifier in an address book of said called communication terminal;
- on reception (ST5) of said incoming communication:
o in case of presence of said main call identifier in said address book, display (ST6) a user identifier stored in said address book in association with said present call identifier;
o in case of absence of said main call identifier and of said at least one secondary call identifier in said address book, display (ST6) said at least one identification datum comprised in said received notification.
